# EUROPÄISCHE PATENTANMELDUNG

(11) **EP 0 893 682 A2**
(43) Veröffentlichungstag der Anmeldung: **27.01.1999**
(21) Anmeldenummer: 98112573.5
(22) Anmeldetag: 07.07.1998
(51) Int. Cl.: G01N 15/04

(54) **Zentrifugierverfahren zur Probencharakterisierung**

(30) Priorität: 09.07.1997 DE 19729352
(71) Anmelder: BASF AKTIENGESELLSCHAFT, 67056 Ludwigshafen (DE)
(72) Erfinder: Schrof, Wolfgang, Dr., 67271 Neuleinigen (DE); Rossmanith, Peter, Dr., 67063 Ludwigshafen (DE); Mächtle, Walter, Dr., 67067 Ludwigshafen (DE)
(74) Vertreter: Isenbruck, Günter, Dr.

(57) **Zusammenfassung**

Verfahren zur Charakterisierung mindestens einer Probe mit mindestens einem Stoff (Sᵢ), bei dem mindestens ein Stoff (Sᵢ) in der Probe identifiziert wird und bei dem mindestens eine Größe (Gⱼᵢ), die einen Stoff (Sᵢ) in der Probe charakterisiert, bestimmt wird, wobei in einer Vorrichtung zur analytischen Zentrifugation mindestens folgende Verfahrensschritte nacheinander oder gleichzeitig ausgeführt werden:
a) Zentrifugation der Probe in einer analytischen Zentrifuge,
b) Einleiten von monochromatischem Licht, vorzugsweise Laserlicht, in die Probe,
c) Detektieren von Streulicht aus der Probe,
d) Identifizieren von mindestens einem Stoff (Sᵢ) durch eine spektrale Auswertung des inelastisch gestreuten Anteils des Streulichts, das in Schritt c) detektiert wurde, z.B. mittels Ramanstreuung, und
e) Bestimmung mindestens einer Größe (Gⱼᵢ) für einen Stoff (Sᵢ) durch eine Auswertung des Zustandes der Probe, den diese als Folge der Zentrifugation in Schritt a) angenommen hat.

## Beschreibung

Die vorliegende Erfindung bezieht sich auf ein Verfahren und eine Vorrichtung zur Charakterisierung einer Probe, die mindestens einen Stoff darin gelöst oder dispergiert enthält, durch eine Kombination aus analytischer Zentrifugation und der spektralen Auswertung des inelastisch gestreuten Anteils des Streulichts, das der mindestens eine Stoff aussendet. Insbesondere betrifft die Erfindung ein Verfahren und eine Vorrichtung zur Bestimmung charakteristischer Größen von gelösten oder dispergierten Stoffen in Form von Partikeln, wie z.B. der Dichte, des Molekulargewichts, der Molekulargewichtsverteilung und der Teilchengrößenverteilung dieser Stoffe in Form von Partikeln, das zusätzlich Informationen über den Aufbau der Partikel liefert. "Partikel" bezeichnet im Rahmen der Erfindung die untersuchten Substanzen/Materialien in Form von gelösten und/oder dispergierten Teilchen, was sowohl niedermolekulare als auch hochmolekulare Substanzen einschließt.

Ein bekanntes Verfahren zur Bestimmung der oben genannten charakteristischen Größen ist die analytische Zentrifugation, wobei jedoch bedingt durch die Größe der in der Regel zu untersuchenden Stoffe in Form von Partikeln überwiegend die analytische Ultrazentrifugation verwendet wird. Die vorliegende Anmeldung ist jedoch so zu verstehen, daß auch andere analytische Zentrifugen, wie z.B. eine Scheibenzentrifuge, d.h. Zentrifugen, mit denen sich lediglich eine vergleichsweise niedrige Drehzahl erreichen läßt, im Rahmen des erfindungsgemäßen Verfahrens verwendet werden können. Im folgenden wird jedoch die vorliegende Erfindung anhand der analytischen Ultrazentrifuge erläutert, wobei zu beachten ist, daß der im Rahmen der vorliegenden Erfindung verwendete Begriff "Ultrazentrifuge" immer eine analytische Ultrazentrifuge (AUZ) meint.

In einer Ultrazentrifuge, also einer sehr schnell rotierenden Zentrifuge mit der Geschwindigkeiten von 60.000 U/min. oder mehr erreicht werden können, können Stoffgemische von Stoffen mit verschiedener Dichte und/oder Größe getrennt (fraktioniert) werden. Ultrazentrifugen können dabei auf mehrerlei Weisen betrieben werden. Einen Überblick hierüber gibt u.a. ein Artikel von W. Mächtle "*Analysis of Polymer Dispersions with an Eight-Cell-AUC-Multiplexer: High Resolution Particle Size Distribution and Density Gradient Techniques*" in S. E. Harding et al. (Hrsg.) "Analytical Ultra-centrifugation in Biochemistry and Polymer Science", Royal Society and Chemistry, Cambridge England 1992, Kap. 10.

Die wichtigsten AUZ-Meßtechniken sind der Sedimentations-(S-)Lauf, der nach der Größe der Partikel fraktioniert, d.h. nach deren Molekulargewichtsverteilung bzw. Teilchengrößenverteilung, der Gleichgewichtslauf, mit dem sich das Gewichtsmittel des Molekulargewichts der Partikel bestimmen läßt, und der Dichtegradienten-(DG-)Lauf, der nach der Dichte, d.h. nach chemischer Uneinheitlichkeit, Komponentenzahl, Pfropfgrad, etc., fraktioniert.

Wie bereits oben angedeutet, kann die Zentrifugation auf mehrerlei Weise betrieben werden:

### 1. Sedimentationslauf (S-Lauf)

Währen des S-Laufes wird (werden) die zu analysierende(n) Probe(n) einer konstanten oder steigenden Drehzahl, beispielsweise einer Steigerung, ausgehend von ungefähr 600 U/min. bis ungefähr 60.000 U/min. ausgesetzt. Da die Sedimentationsrate der Partikel innerhalb der Probe proportional zum Quadrat der Drehgeschwindigkeit ist, sedimentieren Partikel einer bestimmten Größe mit der 10.000-fachen Geschwindigkeit, sofern die Drehgeschwindigkeit von z.B. 600 auf 60.000 U/min. erhöht wird. Durch Messung einer für die sich in der Probe befindlichen Partikel charakteristischen Größe, z.B. der Absorption, läßt sich während eines derartigen S-Laufes die Kinetik der Sedimentation der Teilchen beobachten. Die Geschwindigkeit, mit der sich die Teilchen zum Boden des Probenbehälters bewegen, ist abhängig von deren Durchmesser. Somit läßt der S-Lauf unmittelbar Aussagen über die Partikelgröße und deren Verteilung innerhalb einer Probe zu, da die Bestimmung einer für die Probe charakteristischen Größe zum Zeitpunkt T über die gesamte Probe hinweg den "Ist"-Zustand dieser Probe bezüglich der Verteilung von Partikeln innerhalb derselben zuläßt. Dazu ist die Kenntnis bestimmter Hilfsgrößen, wie z.B. der Teilchendichte, des Absorptionskoeffizienten, oder des spezifischen Brechungsindexinkrements nötig.

Zur Auftrennung einer Probe, die niedermolekulare und hochmolekulare Partikel enthält, eignet sich insbesondere der sogenannte Überschichtungslauf unter Verwendung von Überschichtungszellen, wie sie z.B. von der Firma Beckman erhältlich sind. In einer derartigen Überschichtungszelle befindet sich neben mindestens einer Analysekammer mit der Probe mindestens eine Vorratskammer, in der sich Lösungsmittel befindet. Dieses Lösungsmittel wird dann während des Ultrazentrifugationslaufes dadurch freigesetzt, daß oberhalb einer bestimmten Drehzahl der Ultrazentrifuge die Trennung zwischen der die Probe enthaltenden Kammer und der Vorratskammer für Lösungsmittel aufgehoben wird, und so Lösungsmittel in die die Probe enthaltende Kammer gelangen kann.

Während des Überschichtungslaufs läßt man also zunächst die Ultrazentrifuge anlaufen, wobei oberhalb einer bestimmten Drehzahl das in der Vorratskammer befindliche Lösungsmittel in die Probenkammer gelangt und die dort vorhandene Lösung überschichtet. Während dieses Laufes sedimentieren die großen Partikel in Richtung des Schwerefeldes, während die kleinen Partikel, die aufgrund ihrer geringen Größe nicht in der Lage sind zu sedimentieren, an der Grenzfläche zwischen der Probenlösung und dem überschichteten Lösungsmittel bleiben. Das Vorhandensein von zusätzlichem Lösungsmittel führt dazu, daß sich die diesen kleinen Partikeln zuzuordnende Bande dadurch verbreitet, daß die Partikel teilweise in das zusätzlich vorhandene Lösungsmittel diffundieren.

Diese Methode eignet sich in ausgezeichneter Weise zum Auftrennen von Proben, die gleichzeitig kleine und große Partikel nebeneinander enthalten.

### 2. Gleichgewichtslauf

Im sogenannten Gleichgewichtslauf läßt sich das Gewichtsmittel des Molekulargewichts M_{w} von Partikeln bestimmen. Hierzu werden Proben verschiedener Partikelkonzentration c bei einer Rotordrehzahl gleichzeitig bis zum stationären Zustand zentrifugiert. Aus dem radialen Konzentrationsverlauf der Partikel im stationären Zustand innerhalb der Meßzelle wird die jeweilige Konzentrationsverteilung ermittelt und aus dieser unter Verwendung der oben genannten separat zu bestimmenden Hilfsgrößen ein scheinbares Molekulargewicht M_{c} berechnet. Durch Auftragen von 1/M_{c} gegen c und Extrapolation auf c=0 erhält man M_{w}. Mit dieser Methode können Partikel mit einem Gewichtsmittel des Molekulargewichts im Bereich von ungefähr 300 bis ungefähr 1x10⁸ g/mol erfaßt werden. Zur Bestimmung des radialen Konzentrationsverlaufs in den einzelnen Proben wird in der Regel eine Interferenz- oder eine Schlierenoptik verwendet, wobei bei der Verwendung von letzterer unter sonst gleichen Bedingungen anstelle von M_{w} das z-Mittel des Molekulargewichts M_{z} bestimmt wird. Durch Auswertung von M_{z} und M_{w} sind Aussagen über die Molekulargewichtsverteilung und damit die Uneinheitlichkeit einer Probe, z.B. eines Polymers, möglich.

### 3. Dichtegradientenlauf (DG-Lauf)

Eine weitere Betriebsmöglichkeit einer Ultrazentrifuge besteht darin, daß man zwei Lösungsmittel mit unterschiedlichen Dichten mit den zu untersuchenden Partikeln mischt und dieses Gemisch dann zentrifugiert. Die beiden unterschiedlich dichten Lösungsmittel bilden dabei in der Probe einen Dichtegradienten aus, in dem sich die Partikel entsprechend ihrer eigenen Dichte anordnen, d.h. entsprechend ihrer eigenen Dichte an einer festen radialen Position, an der die Dichte des sie umgebenden Lösungsmittelgemischs der eigenen Dichte entspricht, verbleiben. Mit dieser Methode ist es also möglich, Partikel nach ihrer Dichte, also nach ihrer chemischen Natur, voneinander zu trennen. Auf diese Weise können z.B. Polymergemische in die Einzelkomponenten zerlegt werden. So ist es beispielsweise möglich, den Erfolg einer Blockcopolymerisation zu überprüfen oder den mittleren Pfropfgrad sowie die Pfropfgradverteilung einer Pfropfdispersion zu bestimmen.

Obwohl es mit Hilfe der Ultrazentrifugation in eleganter Weise gelingt, Proben nach dem Molekulargewicht, der Teilchengröße und der Dichte der darin befindlichen Partikel zu fraktionieren, läßt die Ultrazentrifugation doch prinzipiell keine chemische Identifikation der Fraktionen zu.

Aus diesem Grund wurde in der Vergangenheit die Ultrazentrifugation mit der Bestimmung von Absorptions- und Fluoreszenzspektren während des Ultrazentrifugations-Laufs gekoppelt, um Aussagen über die "Chemie" der in der Probe befindlichen Partikel treffen zu können. Diese Methoden bringen jedoch insbesondere, sofern die sich in der Probe befindlichen Partikel organischer Natur sind, nur geringe Vorteile, da die (meisten) organischen Materialien keine oder sehr ähnliche UV/VIS-Absorption und/oder Fluoreszenz aufweisen. Ferner ist es bei der Aufnahme von Fluoreszenzspektren häufig notwendig, die zu untersuchenden Partikel entsprechend zu markieren, was in der Regel einen zusätzlichen Arbeitsschritt bedeutet.

Die Aufgabe der vorliegenden Erfindung liegt demnach in der Bereitstellung eines Ultrazentrifugationsverfahrens, mit dem es gelingt, verschiedene Partikel in einer Probe während oder nach ihrer Auftrennung in einer Zentrifuge, auf einfache und genaue Weise zu identifizieren.

Diese Aufgabe wird durch das erfindungsgemäße Ultrazentrifugationsverfahren gelöst. Dieses stellt ein Verfahren zur Charakterisierung mindestens einer Probe mit mindestens einem Stoff (Sᵢ) dar, bei dem mindestens ein Stoff (Sᵢ) in der Probe identifiziert wird und bei dem mindestens eine Größe (Gⱼᵢ), die einen Stoff (Sᵢ) in der Probe charakterisiert, bestimmt wird. Erfindungsgemäß werden dabei mindestens folgende Verfahrensschritte nacheinander oder gleichzeitig in einer Vorrichtung zur analytischen Zentrifugation ausgeführt:
a) Zentrifugation der Probe in einer analytischen Zentrifuge, vorzugsweise einer analytischen Ultrazentrifuge. Eine analytischen Ultrazentrifuge bezeichnet dabei eine Zentrifuge, die mit einer genügend hohen Drehzahl rotiert, um auch Stoffe mit relativ geringen Dichteunterschieden zu trennen. Im Rahmen der Erfindung können dabei die Zeitdauer und die Bedingungen der Zentrifugation, zum Beispiel die Drehzahl, der zeitliche Verlauf der Drehzahl, die Dauer des Laufs oder die Probengeometrie, an den jeweiligen Einsatzzweck angepaßt werden. Ebenso kann die Bauart, zum Beispiel Zahl und Anordnung der Probenkammern, der verwendeten Ultrazentrifuge an die jeweiligen Bedürfnisse angepaßt werden. Ferner kann die Zentrifugation in Abhängigkeit vom Trennproblem als Sedimentations-, Dichtegradienten- oder Gleichgewichts-Lauf, wie jeweils eingangs definiert, durchgeführt werden.
b) Einleiten von monochromatischem Licht, vorzugsweise Laserlicht, in die Probe. Dieses Licht wird an der Probe gestreut.
   Die Frequenz des eingeleiteten monochromatischen Lichts wird vorzugsweise so gewählt, daß eine resonante Verstärkung des Streulichts oder von Anteilen des Streulichts eintritt. Damit kann der im nächsten Schritt diskutierte Ramaneffekt resonant überhöht werden, was in vielen Fällen eine Erkennung von nur in Spuren vorhandenen Stoffen überhaupt erst möglich macht.
c) Dieses an der Probe gestreute Licht wird detektiert. Dazu können alle Lichtdetektionssysteme verwendet werden, die eine Detektion nach spektroskopischen Banden erlauben, wie z.B. Photomultiplier, Photodioden, zweidimensionale Detektoren (CCD-Photodioden, etc.) in Verbindung mit Spektrographen, Gittern, Prismen oder Farb- oder Interferenzfiltern. Insbesondere sollen die Streulichtanteile aufgefangen werden, die eine Wellenlängenverschiebung gegenüber dem eingestrahlten Licht aufweisen, also auf einer inelastischen Lichtstreuung der Probe, wie z.B. Molekül- oder Gitterschwingungen beruhen. Diese Wellenlängenverschiebung ist allgemein als Ramaneffekt bzw. Brillouin-Effekt bekannt.
   Vorzugsweise detektiert man hier das Rückwärtsstreulicht aus der Probe. Damit können auch Proben untersucht werden, die nicht oder kaum lichtdurchlässig sind, insbesondere optisch dicke Polymerproben.
d) Identifizieren von mindestens einem Stoff (Sᵢ) durch eine spektrale Auswertung des inelastisch gestreuten Anteils des Streulichts, das in Schritt c) detektiert wurde, d. h. des Ramanstreulichts. Man verwendet hier also die Ramanspektroskopie zur Identifizierung, d. h. zur Bestimmung der chemischen Zusammensetzung mindestens eines Stoffes (Sᵢ) in der Probe. Einige ramanspektroskopische Verfahren, die im Rahmen der vorliegenden Erfindung geeignet sind, werden in B.Schrader, Infrared and Raman Spectroscopy, Weinheim, 1995 und L.Markwort, B.Kip, E.Da Silva, B.Roussel, Applied Spectroscopy, 49 (1995) 1411 beschrieben. Dabei muß der jeweilige Stoff in seiner chemischen Zusammensetzung nicht unbedingt vollständig bestimmt werden. In vielen Fällen genügt es, Stoffe eines Stoffgemisches in einer Probe qualitativ voneinander zu unterscheiden. Andererseits kann es in manchen Fällen aber auch notwendig oder erwünscht sein, nicht nur die chemische Zusammensetzung eines Stoffes in einer Probe, sondern auch dessen Bindungszustand aufgrund der gemessenen Molekülschwingungen zu bestimmen. Ein besonderer Vorteil der Ramanspektroskopie stellt die Unempfindlichkeit gegenüber polaren Verbindungen dar, die Messungen in wäßrigem Milieu zuläßt, ohne daß dem Wasser zuzuordnende Banden die Ramanspektren anderer Bestandteile der Proben überlagern. Ferner ist es möglich, durch Verwendung neuer, hochempfindlicher Spektrometer, die hauptsächlich in Rückstreuung arbeiten, wie z.B. eine Kombination von Notchfiltern, Einfach-Spektrographen, CCD-Arrays und hocheffektiver Abbildungsoptik, etc., die Meßzeiten bis in den Sekundenbereich zu verkürzen. Die Verknüpfung der Ramanspektroskopie mit Mikroskopen und Lichtleitern ermöglicht ortsaufgelöste Messungen bis in den µm-Bereich bzw. eine räumlich Trennung von Meßkopf und Spektrometer, auf die hierin später noch im Detail eingegangen wird.
   Zusätzlich kann die Identifizierung eines Stoffes in der Probe noch durch die Auswertung der Intensität des elastischen Streulichtanteils erfolgen. Auch das Spektrum oder die Intensität von Fluoreszenzlicht, das von der Probe emittiert wurde, kann ergänzend ausgewertet werden, um die Identität von Stoffen in der Probe zu bestimmen. Dabei kann die Bestimmung der Fluoreszenz und der Lichtstreuung sowohl in Rückals auch in Vorwärtsrichtung gemessen werden.
   Zur Bestimmung der Absorption wird ein speziell an die apparativen Gegebenheiten in der Ultrazentrifuge angepaßter Zweitstrahl-Spektrograph verwendet, in dem ein Strahl des eingeleiteten monochromatischen Lichts in die Probe geleitet wird und ein paralleler Strahl desselben in das entsprechende reine Lösungsmittel eingeleitet wird.
   Die Bestimmung des Brechungsindex kann durch eine Interferenz- oder Schlierenoptik bestimmt werden.
   Selbstverständlich kann das hier in Rede stehende Verfahren bzw. die dann verwendete Vorrichtung mit einer entsprechenden Datenbank für z.B. Ramanspektren gekoppelt werden und so eine schnelle Identifizierung auch unbekannter Stoff in der Probe ermöglichen. Insbesondere wird es dadurch möglich, das hierin beschriebene Verfahren als Routineanalytik von Proben, insbesondere Polymerdispersionen, zu verwenden. Dabei sind insbesondere zu nennen: Styrol-, Butadien-, Acrylat-, Acrylnitril-, Amid-, etc., Homo- oder Copolymere und anorganische oder organische Pigmente.
   Weiterhin eignet sich das erfindungsgemäße Verfahren besonders zur Untersuchung von Proben unbekannter Zusammensetzung und der Verteilung bekannter Stoffe innerhalb einer Probe.
e) Bestimmung mindestens einer Größe (Gⱼᵢ) für einen Stoff (Sᵢ) durch eine Auswertung des Zustandes der Probe, den diese als Folge der Zentrifugation in Schritt a) angenommen hat. In diesem Verfahrensschritt werden diejenigen charakteristischen Größen eines Stoffes (Sᵢ) bestimmt, die auch sonst mit Ultrazentrifugierverfahren bestimmt werden können, vgl. dazu W.Mächtle, S.Harding, AUZ in Biochemistry and Polymer Science, Cambridge, 1991; W.Mächtle, Angewandte Makromolekulare Chemie, 162 (1988) 35; W.Mächtle, Colloid and Polymer Science, 262 (1984) 270. Vorzugsweise werden als Größen (Gⱼᵢ) die Dichte oder die Sedimentationsgeschwindigkeit bzw. der Sedimentationskoeffizient eines Stoffes (Sᵢ) in der Probe bestimmt.
   Aus den in diesem Verfahrensschritt ermittelten charakteristischen Größen können dann in einem zusätzlichen Auswerteschritt die gewünschten Werte, wie Molekulargewichtsverteilung oder Teilchengrößenverteilung bestimmt werden.
   Vorzugsweise verwendet man zur Bestimmung der Größe (Gⱼᵢ) eines Stoffes (Sᵢ) einen Unterschied in dem Brechungsindex an verschiedenen Stellen der Probe. Damit können zum Beispiel auf einfache Weise Domänen von Stoffen in der Probe nach der Ultrazentrifugation ermittelt werden. Unter Umständen muß der interessierende Stoff überhaupt erst in der Probe aufgefunden werden, weil er vom Rest der Probe optisch nicht unterscheidbar ist, aber durch die Ultrazentrifugation bzgl. der Dichte, Größe, etc. aufgetrennt wird und anschließend die einzelnen Fraktionen spektroskopisch untersucht werden können. Dies ist häufig bei Proben aus einem Gemisch von Polymeren verschiedener Struktur, aber gleicher chemischer Grundzusammensetzung der Fall.
   Die Messung der Brechungsindexdifferenzen entlang der Probe kann dabei mit jedem bekannten Verfahren zur Bestimmung des Brechungsindex an einer Probe ausgeführt werden. Im Regelfall wird man für diese Messungen eine eigene Lichtquelle, neben der in Schritt b) genannten monochromatischen Lichtquelle vorsehen. Es ist aber auch denkbar, daß man für diesen Fall einen Teil des monochromatischen Lichts abzweigt, so daß man lediglich eine Lichtquelle benötigt. Im Rahmen der Erfindung ist es nicht unbedingt notwendig, daß man Absolutwerte des Brechungsindex bestimmt. In vielen Fällen wird es genügen, Brechungsindexänderungen lediglich qualitativ zu bestimmen, um zum Beispiel anhand eines plötzlichen Sprunges des Brechungsindex eine Domäne eines Stoffes in der Probe zu erkennen. Dieser Stoff kann dann mit Hilfe der Ramanspektroskopie identifiziert werden, so daß man die Änderungen des Brechungsindex lediglich als eine Art Suchstange verwendet.

Bevorzugt ist ein Verfahren, bei dem eine Optik verwendet wird, die den Fokus des in Schritt b) eingeleiteten monochromatischen Lichts innerhalb der Probe verschiebt, wie z.B. konfokale optische Abbildungen, bei denen durch Hin- und Herbewegen des Senders das betrachtete Tiefensegment innerhalb einer Probe eingestellt werden kann. Dabei kann eine Genauigkeit von ca. 1 bis 3 µm bezüglich des eingestellten Fokus, d.h. des gewünschten Tiefensegments, erreicht werden, Die Tiefenschärfe ist durch Verwendung einer Blende oder einer Lichtleitfaser mit geeignetem Innendurchmesser einstellbar, d.h. es ist mit dieser Methode möglich, eine Probe sowohl vertikal, d.h. in Richtung des Lichtstrahls (Tiefenprofil), als auch radial, d.h. in Richtung des Schwerefeldes, zu vermessen. Sofern größere laterale Bereiche betrachtet werden sollen, ist es im Rahmen der vorliegenden Erfindung ferner möglich, die gesamte Optik zu translatieren, z. B. mit einem Verschiebetisch oder einer piezomechanischen Vorrichtung. Die Verwendung derartiger Anordnungen ist zum Beispiel dann von Vorteil, wenn in der Ultrazentrifuge Probenkammern verwendet werden, die radial und/oder vertikal in mehrere parallele Teilkammern unterteilt sind. Dadurch lassen sich bei einer Ultrazentrifugation mehrere Proben gleichzeitig vermessen.

Eine Verschiebung des Fokus für den Einstrahlkegel des monochromatischen Lichts, wie auch eine entsprechende Verschiebung des Aufnahmekegels für die Detektion des Streulichts erlaubt auch die sukzessive Untersuchung mehrerer Proben, die sich in parallel angeordneten Kammern innerhalb einer Zelle befinden, ohne separate Optiken für jede Kammer vorzusehen. Allgemein kann mit dem bevorzugten Verfahren eine Probe lokal vermessen werden.

Bevorzugt ist auch ein Verfahren, bei dem man in Schritt b) den Ort der Einleitung des monochromatischen Lichts und in Schritt c) den Ort der Detektion des Streulichts entlang der Probe verschieben kann. Damit kann die Probe während der Zentrifugation mit Hilfe einer einzigen Ramanspektroskopie-Optik untersucht werden, da diese einfach entlang der Probe hin- und herbewegt wird. Man kann aber, je nach Zielsetzung, auch nur statisch an einem Punkt der Probe messen und zum Beispiel den Durchlauf der Teilchen durch diesen Punkt betrachten.

Die vorliegende Erfindung kann durch die Verwendung von Lichtleitfasern besonders vorteilhaft angewendet werden. Zum Beispiel kann das mono-chromatische Licht, das für die Streulichterzeugung benutzt wird, mit Hilfe einer Lichtleitfaser in die Probe eingestrahlt werden. Die Detektion kann dann ebenso mit Lichtleitfasern erfolgen. Dadurch wird es möglich, die aufwendige Ramanmeßtechnik räumlich von der Ultrazentrifuge zu trennen. Beide Teilmeßanlagen können etwa in getrennten Labors stehen und können mit Lichtleitfasern und gegebenenfalls einem Steuerungssystem für die oben angesprochene bevorzugte Bewegung der Lichtquelle und des Ramandetektors entlang der Probe verbunden sein.

Zur simultanen Charakterisierung mehrerer Proben, wobei gleichzeitig mehrere Proben mittels eines Mehrkammerrotors zentrifugiert und gleichzeitig ramanspektroskopisch untersucht werden, kann das erfindungsgemäße Verfahren wie folgt durchgeführt werden.

Lichtpulse, wie z.B. aus einem gepulsten Laser oder einem modulierten Dauerstrich-Laser werden über eine optische Triggerung auf die einzelnen Zellen innerhalb eines Rotors, z.B. eines 4- oder 8-Loch-Rotors, abgebildet. Das in Rückstreuung detektierte Ramanlicht wird in einem Spektrometer analysiert.

Der Einsatz eines zweidimensionalen Detektors, z.B. eines CCD-Arrays, erlaubt einerseits die Detektion der durch die einzelne Probe emittierten Rückstreuung (z.B. in horizontalen Zeilen) und andererseits die Zuordnung zu bestimmten, aber verschiedenen Kammern (z.B. in vertikalen Zeilen) über z.B. einen synchron, beispielsweise über eine galvanisch angesteuerte Aufhängung, angesteuerten Kippspiegel, oder Piezo-Translatoren oder akusto- und elektro-optische Strahlführungssysteme. Dies ermöglicht die gleichzeitige Charakterisierung der Proben innerhalb der Kammern.

Selbstverständlich kann die Messung auch sequentiell durchgeführt werden, z.B. bei ausreichend langer Laufzeit der AUZ, wobei dann auch auf die zusätzliche Abbildungsoptik verzichtet werden kann.

Mit dieser Meßanordnung eignet sich das erfindungsgemäße Verfahren hervorragend zur Routineanalytik.

Im Rahmen der vorliegenden Erfindung wird auch eine Vorrichtung zur Charakterisierung mindestens einer Probe, die mindestens einen Stoff (Sᵢ) enthält, bereitgestellt. Erfindungsgemäß weist diese Vorrichtung mindestens folgende zusammenwirkende Bauelemente auf:
eine Einrichtung zur analytischen Zentrifugation mit mindestens einer Kammer zur Aufnahme der Probe,
eine Einrichtung zur Einstrahlung von monochromatischem Licht in die Probe und zur Detektion von Streulicht aus der Probe und
eine Einrichtung zur Bestimmung einer Größe Gⱼᵢ, die den Stoff Sᵢ charakterisiert.

Diese Vorrichtung kann dazu dienen, das oben geschilderte erfindungsgemäße Verfahren auszuführen. Sie kann auch um weitere Elemente ergänzt werden, die zur Ausführung der oben geschilderten bevorzugten oder vorteilhaften Varianten des erfindungsgemaßen Verfahrens notwendig oder nützlich sind.

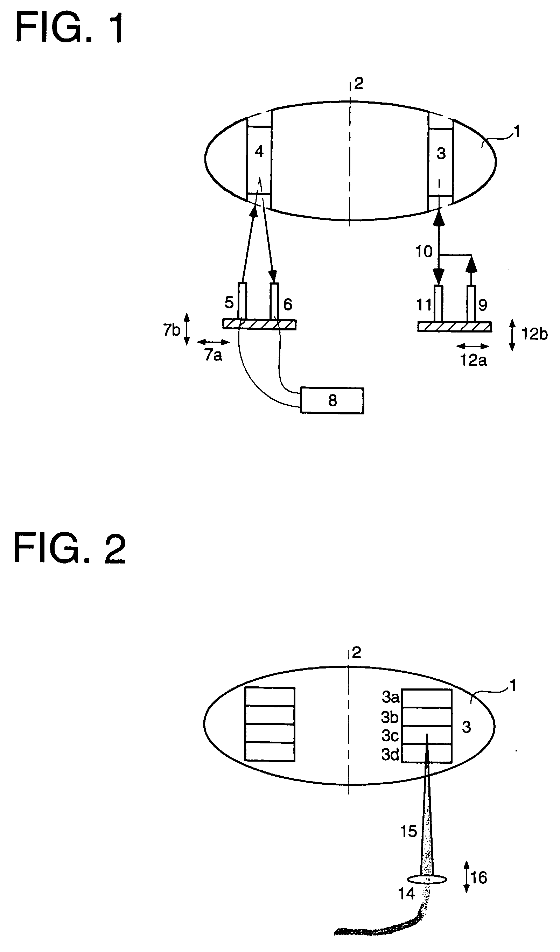

Im Folgenden wird die vorliegende Erfindung an Hand der Figuren 1 und 2 beschrieben. Dabei zeigt
- Figur 1:: eine Ausführungsform einer erfindungsgemäßen Vorrichtung zur Probencharakterisierung
- Figur 2:: ein Detail einer bevorzugten erfindungsgemäßen Vorrichtung zur Probencharakterisierung

Figur 1 zeigt eine schematische Darstellung einer erfindungsgemäßen Vorrichtung zur Probencharakterisierung. Diese enthält einen Rotor 1 mit einer Rotationsachse 2 und einer Zelle mit mindestens einer Kammer zur Aufnahme einer Probe, die sich in einer Bohrung des Rotors befindet (3, 4), eine Laserlichtquelle 5, mit oder ohne Abbildungsoptik, die Licht in die Zelle 4 einstrahlen kann, und ein Detektionssystem 6, das Rückstreulicht aus der Probenkammer 4 spektral getrennt aufnehmen kann. Weiterhin kann eine Lichtquelle 9 über einen Notchfilter 10 abgebildet werden auf die Zelle 3. Das rückgestreute Licht passiert das Notchfilter 10 und wird im Detektionssystem 11 spektral analysiert. Die Lichtquelle 5,9 und das Detektionssystem 6,11 bzw. ihre Abbildungsoptik können auf getrennten Unterlagen oder einer gemeinsamen Unterlage (nicht gezeigt) angebracht werden. In beiden Anordnungen ist es möglich, daß sie synchron entlang der Pfeile 7a bzw. 12a radial und entlang der Pfeile 7b bzw. 12b vertikal bewegt werden können. Damit ist es möglich, die Zellen 3,4 in radialer Richtung 7a, 12a und vertikaler Richtung 7b, 12b abzutasten.

Während sich Rotor 1 um die Rotationsachse 2 dreht, kann die Lichtquelle 5 monochromatisches Licht in die Zelle 4 einstrahlen, wenn diese gerade bei einem Umlauf an ihr vorbeiläuft. Das elastisch und inelastisch gestreute Licht wird in Rückstreugeometrie von dem Detektionssystem 6,11 oder deren Abbildungsoptik aufgefangen. Dieses gibt die registrierten Werte an die Auswerteeinheit 8 weiter, die die Auswertung vornimmt. Die charakteristischen Größen eines aufgefundenen und identifizierten Stoffes, wie Dichte, Sedimentationsgeschwindigkeit, Sedimentationskoeffizient, Molekulargewichtsverteilung oder Teilchengrößenverteilung, können mit den bei herkömmlichen Ultrazentrifugen üblichen, hier nicht dargestellten und nicht beschriebenen Verfahren ermittelt werden.

Figur 2 zeigt ein Detail einer bevorzugten Ausführungsform der erfindungsgemäßen Vorrichtung zur Probencharakterisierung. Eine Zelle 3 innerhalb des Rotors 1 ist hier in vertikaler Richtung parallel zur Rotationsachse 2 in vier Kammern 3a bis 3d aufgeteilt. Damit können mehrere Proben zeitgleich und unter identischen Bedingungen gemessen werden. Erfindungsgemäß wird eine Lichtquelle 14 in fokaler Abbildung mit einem Fokus 15 eingesetzt, wobei der Fokus 15 innerhalb der Zelle 3 zwischen den Teilkammern 3a bis 3d, entlang des Pfeils 16, vertikal und gegebenenfalls radial dazu, verschoben werden kann. Damit können nacheinander alle vier Teilkammern untersucht werden, ohne separate Optiken einzusetzen. Dies ist vor allem für eine Lichtquelle 14 von Interesse, die monochromatisches Licht für die Ramanstreuung in die Probe einstrahlt, sowie für ein entsprechendes Detektionssystem.

## Patentansprüche

1. Verfahren zur Charakterisierung mindestens einer Probe mit mindestens einem Stoff (Sᵢ), bei dem mindestens ein Stoff (Sᵢ) in der Probe identifiziert wird und bei dem mindestens eine Größe (Gⱼᵢ), die einen Stoff (Sᵢ) in der Probe charakterisiert, bestimmt wird,
dadurch gekennzeichnet, daß in einer Vorrichtung zur analytischen Zentrifugation mindestens folgende Verfahrensschritte nacheinander oder gleichzeitig ausgeführt werden:
a) Zentrifugation der Probe in einer analytischen Zentrifuge,
b) Einleiten von monochromatischem Licht, vorzugsweise Laserlicht, in die Probe,
c) Detektieren von Streulicht aus der Probe,
d) Identifizieren von mindestens einem Stoff (Sᵢ) durch eine spektrale Auswertung des inelastisch gestreuten Anteils des Streulichts, das in Schritt c) detektiert wurde, und
e) Bestimmung mindestens einer Größe (Gⱼᵢ) für einen Stoff (Sᵢ) durch eine Auswertung des Zustandes der Probe, den diese als Folge der Zentrifugation in Schritt a) angenommen hat.

2. Verfahren nach Anspruch 1, dadurch gekennzeichnet, daß in Schritt e) als Größe (Gⱼᵢ) die Dichte eines Stoffes (Sᵢ) in der Probe bestimmt wird.

3. Verfahren nach Anspruch 1, dadurch gekennzeichnet, daß in Schritt e) als Größe (Gⱼᵢ) die Sedimentationsgeschwindigkeit eines Stoffes (Sᵢ) in der Probe bestimmt wird.

4. Verfahren nach einem der vorhergehenden Ansprüche, dadurch gekennzeichnet, daß zur Bestimmung in Schritt e) ein Unterschied in dem Brechungsindex an verschiedenen Stellen der Probe ausgenutzt wird.

5. Verfahren nach einem der vorhergehenden Ansprüche, dadurch gekennzeichnet, daß in Schritt d) zur Identifizierung zusätzlich eine Auswertung der Intensität des elastischen Streulichtanteils oder des Spektrums oder der Intensität von Fluoreszenzlicht, das von der Probe ausgesandt wird, oder eine Kombination aus zwei oder mehr davon durchgeführt wird.

6. Verfahren nach einem der vorhergehenden Ansprüche, dadurch gekennzeichnet, daß in Schritt c) das Rückwärtsstreulicht detektiert wird.

7. Verfahren nach einem der vorhergehenden Ansprüche, dadurch gekennzeichnet, daß zur Detektion gemäß Schritt c) eine Optik verwendet wird, die den Fokus des in Schritt b) eingeleiteten Lichts innerhalb der Probe verschiebt.

8. Verfahren nach einem der vorhergehenden Ansprüche, dadurch gekennzeichnet, daß eine Vorrichtung verwendet wird, die in Schritt b) den Ort der Einleitung des monochromatischen Lichts und in Schritt c) den Ort der Detektion des Streulichts entlang der Probe verschiebt.

9. Verfahren nach einem der vorhergehenden Ansprüche, dadurch gekennzeichnet, daß in Schritt b) die Frequenz des eingeleiteten Lichts so gewählt wird, daß eine resonante Verstärkung des Streulichts oder von Anteilen des Streulichts eintritt.

10. Vorrichtung zur Charakterisierung mindestens einer Probe, die mindestens einen Stoff (Sᵢ) enthält, dadurch gekennzeichnet, daß die Vorrichtung mindestens folgende zusammenwirkende Bauelemente aufweist:
eine Einrichtung zur analytischen Zentrifugation mit mindestens einer Kammer zur Aufnahme der Probe,
eine Einrichtung zur Einstrahlung von monochromatischem Licht in die Probe und zur Detektion von Streulicht aus der Probe, und
eine Einrichtung zur Bestimmung einer Größe (Gⱼᵢ), die den Stoff (Sᵢ) charakterisiert.
